# EUROPÄISCHE PATENTSCHRIFT

(11) **EP 3 647 133 B1**
(45) Veröffentlichungstag und Bekanntmachung des Hinweises auf die Patenterteilung: **16.02.2022**
(21) Anmeldenummer: 19205252.0
(22) Anmeldetag: 25.10.2019
(51) Int. Cl.: B60S 1/48, B60S 1/50

(54) **VORRICHTUNG ZUM BEREITSTELLEN VON SCHEIBENWISCHWASSER UND KRAFTFAHRZEUG UMFASSEND EINE VORRICHTUNG ZUM BEREITSTELLEN VON SCHEIBENWISCHWASSER**
DEVICE FOR PROVIDING WIPER WATER AND MOTOR VEHICLE COMPRISING A DEVICE FOR PROVIDING WIPER WATER
DISPOSITIF DE DISTRIBUTION DE LIQUIDE DE RACLEUR D'ESSUIE-GLACE ET VÉHICULE AUTOMOBILE COMPRENANT UN DISPOSITIF DE DISTRIBUTION DE LIQUIDE DE RACLEUR D'ESSUIE-GLACE

(30) Priorität: 30.10.2018 DE 102018127043
(43) Veröffentlichungstag der Anmeldung: 06.05.2020
(60) Teilanmeldung: 21203766.7
(73) Patentinhaber: MAN Truck & Bus SE, 80995 München (DE)
(72) Erfinder: Gerritzen, Ralph, 82110 Germering (DE); Meyer-Tuve, Harald, 85247 Schwabhausen (DE)
(74) Vertreter: v. Bezold & Partner Patentanwälte - PartG mbB

(56) Entgegenhaltungen:
- DE-A1- 2 329 664
- JP-A- S5 950 201
- JP-U- S51 138 831
- US-A- 2 780 491
- US-A- 2 962 223

## Beschreibung

Die Erfindung betrifft eine Vorrichtung zum Bereitstellen von Scheibenwischwasser für ein Kraftfahrzeug. Ferner betrifft die Erfindung auch ein Kraftfahrzeug mit einer entsprechenden Vorrichtung zum Bereitstellen von Scheibenwischwasser.

Um Scheiben und/oder Scheinwerfereinrichtungen, insbesondere Xenonscheinwerfer, von Schmutz wie Reifenabrieb, Pollen, Staub und/oder Insektenresten zu befreien, verfügen heutige Kraftfahrzeuge oftmals standardmäßig über Scheiben- bzw. Scheinwerferreinigungsanlagen. In der Regel wird dabei Scheibenwischwasser aus einem Vorratsbehälter mittels Düsen auf die Scheiben bzw. Scheinwerfer gesprüht, wobei die Reinigungswirkung des Scheibenwischwassers durch entsprechende Scheibenwischer unterstützt werden kann. Beispielhaft sei in diesem Zusammenhang auf die DE 43 30 724 A1 verwiesen, die eine Scheibenwaschanlage dieserart offenbart.

Das Zuführen des Scheibenwischwassers vom Vorratsbehälter an die Düsen erfolgt dabei meist mittels elektrisch angetriebener Wasserpumpen, beispielsweise in Form von Zahnrad- und/oder Kreiselpumpen. Nachteilig an diesen Lösungen ist allerdings, dass die Pumpen aufgrund der Mehrzahl an drehbeweglichen Bauteilen anfällig für Verschleiß, z. B. durch Abrasion, sind.

Dokument JP S59 50201 A offenbart einen Reservetank zum Bereitstellen von Flüssigkeit und Luftdruck für eine Reinigungsanlage und eine Bremsanlage. Der Reservetank wird hierbei von einem Kompressor mit Druckluft beaufschlagt.

Dokument JP S51 138831 U offenbart eine Vorrichtung, bei der ein mit Wischwasser gefüllter Tank mit Druckluft beaufschlagt wird, um durch die Druckluft die Flüssigkeit aus Düsen auszubringen. Die Druckluftbeaufschlagung erfolgt durch die Öffnung eines händisch betätigten Ventils, welches gereinigte Frischluft bereitstellt. Das Dokument US 2,780,491 A offenbart eine Vorrichtung zum Reinigen von Windschutzscheiben von Kraftfahrzeugen und insbesondere auf ein System zur Abgabe von Wasser oder anderen Lösungsmitteln unter Druck an die Windschutzscheibe. Hierfür wird ein Tank mit Druckluft beaufschlagt, sodass die darin enthaltene Flüssigkeit unter Druck auf die Windschutzscheibe geleitet werden kann.

Entsprechend ist es Aufgabe der Erfindung eine im Vergleich zum Stand der Technik verbesserte Vorrichtung zum Bereitstellen von Scheibenwischwasser für ein Kraftfahrzeug bereitzustellen. Insbesondere liegt der Erfindung die Aufgabe zugrunde, eine verschleißarme und einfach zu realisierende Vorrichtung zum Bereitstellen von Scheibenwischwasser zur Verfügung zu stellen.

Diese Aufgaben werden durch eine Vorrichtung und ein Kraftfahrzeug mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die erfindungsgemäße Vorrichtung zum Bereitstellen von Scheibenwischwasser für ein Kraftfahrzeug umfasst - in an sich bekannter Weise - einen Wischwasserbehälter, vorzugsweise einen Flüssigkeitstank, zur Lagerung und Bereitstellung von Scheibenwischwasser. Als "Scheibenwischwasser" kann hierbei vorrangig ein wasserbasiertes Gemisch zur Reinigung von Fahrzeugscheiben und/oder Scheinwerfereinrichtungen verstanden werden. Allerdings kann der Begriff "Scheibenwischwasser" in diesem Zusammenhang auch alle Arten von Waschflüssigkeiten, Reinigungskonzentrate und/oder Gelen umfassen, die prinzipiell zur Scheiben- bzw. Scheinwerferreinigung geeignet sind. Vorzugsweise kann diesen Stoffen dabei auch einen Frostschutzzusatz, z. B. in Form eines alkoholhaltigen Frostschutzmittels, zugegeben sein.

Weiterhin umfasst die erfindungsgemäße Vorrichtung eine Druckregeleinrichtung, die ausgebildet ist, den Wischwasserbehälter regelbar mit Druckluft zu beaufschlagen. Der Begriff "regelbar" kann in diesem Zusammenhang so verstanden werden, dass die Druckluft(menge) und damit der Luftdruck innerhalb des Wischwasserbehälters nicht nur auf einen bestimmten Wert eingestellt, sondern auch auf diesen Wert reguliert werden kann. Anders ausgedrückt kann bei der erfindungsgemäßen Vorrichtung eine Druckluft(menge) bzw. ein Luftdruck im Wischwasserbehälter mittels Regelung beeinflusst werden. Hierbei kann die Vorrichtung selbst auch eine Einrichtung zur Drucklufterzeugung (z. B. einen Kompressor) umfassen. Weiterhin soll der Begriff "Druckluft" dabei nicht nur verdichtete atmosphärische Luft, sondern auch alle Arten von komprimierten Gasen (z. B. Stickstoff) oder Gasgemischen, die als Druckmedien verwendet werden können, umfassen. Mit anderen Worten kann es sich bei der Druckluft auch um ein Druckgas handeln.

Über die regelbare Beaufschlagung mit Druckluft wird - auf vorteilhafte Weise - eine einfache und verschleißarme Möglichkeit zur Bereitstellung von Scheibenwischwasser aus dem Wischwasserbehälter realisiert, bei der das Scheibenwischwasser über den im Inneren des Wischwasserbehälters aufgebauten Druck aus dem Wischwasserbehälter gedrückt und damit "pneumatisch" zu entsprechenden Scheiben und/oder Scheinwerfereinrichtungen gefördert werden kann. Auf vorteilhafte Weise kann dadurch auf eine mechanische Wasserpumpe verzichtet werden.

Erfindungsgemäß ist die Druckregeleinrichtung dabei ausgebildet, einen Luftdruck innerhalb des Wischwasserbehälters, vorzugsweise unabhängig von einem Scheibenwischwasser-Füllstand im Wischwasserbehälter, auf ein Soll-Luftdruckniveau pₛₒₗₗ zu regeln. Hierzu kann die Druckregeleinrichtung mittels eines Regelkreises den Istwert einer Regelgröße (z. B. das Luftdruckniveau im Inneren des Wischwasserbehälters) mit dem vorgegebenen Sollwert der Regelgröße (Soll-Luftdruckniveau pₛₒₗₗ) vergleichen und eine Abweichung zwischen Sollwert und Istwert mithilfe einer auf die Regelgröße einwirkenden Stellgröße (z. B. Ventilstellung) minimieren. Das Soll-Luftdruckniveau pₛₒₗₗ kann dabei fest vorgegeben oder auch variabel sein. Vorzugsweise umfasst die Vorrichtung ferner einen Sollwertgeber, d. h. eine Einrichtung um ein bestimmtes Soll-Luftdruckniveau pₛₒₗₗ an die Druckregeleinrichtung vorzugeben. Auf vorteilhafte Weise kann so ein zeitlich konstantes Luftdruckniveau (pₛₒₗₗ) innerhalb des Wischwasserbehälters aufrechterhalten werden, wodurch von der Vorrichtung auch über längere Betriebszeiten zuverlässig ein konstanter Scheibenwischwasservolumenstrom bereitgestellt wird.

Erfindungsgemäß umfasst die Vorrichtung eine Sensoreinrichtung, vorzugsweise ein Drucksensor, die ein vom Luftdruck innerhalb des Wischwasserbehälters abhängiges Signal erzeugt, wobei die Regelung der Druckregeleinrichtung auf Basis dieses Signals erfolgt.

ist die Sensoreinrichtung dazu zumindest teilweise innerhalb des Wischwasserbehälters angeordnet. Alternativ kann die Sensoreinrichtung jedoch auch außerhalb des Wischwasserbehälters angeordnet sein. Das Signal kann beispielsweise ein analoges oder digitales Spannungssignal sein. D. h. mit anderen Worten kann das vom Drucksensor erzeugte Signal als Regelgröße verwendet werden. Auf vorteilhafte Weise kann dadurch das zuverlässige Detektieren der Regelgröße sichergestellt werden.

Erfindungsgemäß ist ein aus dem Wischwasserbehälter entnehmbarer Scheibenwischwasservolumenstrom über die regelbare Beaufschlagung des Wischwasserbehälters mit Druckluft einstellbar. Vorzugsweise umfasst der Begriff "einstellbar" in diesem Zusammenhang, dass der Scheibenwischwasservolumenstrom, d. h. ein Volumenstrom an Scheibenwischwasser, über einen Volumenstrombereich reversibel variierbar und/oder frei wählbar ist. Beispielsweise kann dabei durch ein Erhöhen des Luftdrucks innerhalb des Wischwasserbehälters der entnehmbare Scheibenwischwasservolumenstrom vergrößert werden und/oder durch ein Erniedrigen des Luftdrucks innerhalb des Wischwasserbehälters der entnehmbare Scheibenwischwasservolumenstrom verringert werden. Der von der konkreten Ausgestaltung (Behälterform, Auslassgröße etc.) abhängige exakte Zusammenhang zwischen Luftdruck im Wischwasserbehälter und resultierender Scheibenwischwasservolumenstrom kann der Fachmann dabei durch entsprechende Vorversuche und/oder durch die Aufnahme von Kennlinien ermitteln. Dabei kann der insgesamt einstellbare Volumenstrombereich durch die technische Auslegung der einzelnen Komponenten, insbesondere deren Druckfestigkeit, vorgegeben sein. Weiterhin kann der entnehmbare Scheibenwischwasservolumenstrom sowohl kontinuierlich, als auch in Stufen einstellbar sein. Auf vorteilhafte Weise wird so eine Möglichkeit bereitgestellt, mit der je nach Anforderung (z. B. Verschmutzungsgrad) unterschiedliche Scheibenwischwasservolumenströme einfach realisieren werden können.

Nach einem weiteren Aspekt der Erfindung kann die Vorrichtung einen Anschluss, z. B. einen Flanschanschluss, zur externen Druckbeaufschlagung umfassen, über den der Wischwasserbehälter pneumatisch an mindestens ein Druckluftsystem Sₙ eines Kraftfahrzeugs, z. B. eine Druckluftbremsanlage, koppelbar ist. Mit anderen Worten kann die zur regelbaren Beaufschlagung des Wischwasserbehälters verwendete Druckluft somit auch von einem nicht unmittelbar zur Vorrichtung selbst gehörigen Druckluftsystem Sₙ bereitgestellt werden. Als "Druckluftsystem" kann hierbei eine Einrichtung verstanden werden, die zumindest ein druckluftbetriebenes Bauteil, z. B. einen pneumatischen Aktor, und/oder eine druckluftführende Leitung umfasst. Neben der erwähnten Ausbildung des Anschlusses zur externen Druckbeaufschlagung als Flansch können auch weitere - dem Fachmann geläufige - Anschlussformen, darunter Rohrstutzen, Ventile, Kupplungen, Schraub- und/oder Steckverbindungen, verwendet werden, die für ein Zu- bzw. Abführen von Druckluft geeignet sind. Ferner kann das pneumatische Koppeln bzw. Verbinden der Vorrichtung mit dem Druckluftsystem Sₙ mittels pneumatischer Förderleitungen erfolgen. Auf vorteilhafte Weise wird dadurch eine Nutzung der in Fahrzeugen oftmals bereits vorhandener Druckluft ermöglicht, wodurch auf einen eigenen Verdichter der Vorrichtung selbst verzichtet werden kann.

Gemäß einem weiteren Aspekt der Erfindung kann die Vorrichtung eine Einrichtung zur Druck-Reduzierung, vorzugsweise in Form eines Gasdruckreglers und/oder in Form eines pneumatischen Druckminderungsventils, umfassen. Die Einrichtung zur Druck-Reduzierung kann dabei ausgebildet sein, ein eingangsseitig anliegendes Druckniveau, z. B. 10 bar, ausgangsseitig auf ein niedrigeres Druckniveau, z. B. 1 bar, abzusenken. Weiterhin kann die Einrichtung zur Druck-Reduzierung ausgebildet sein, der Druckregeleinrichtung und/oder dem Wischwasserbehälter ein bestimmtes, vorzugsweise zeitlich konstantes, Druckniveau bereitzustellen. Anders ausgedrückt kann die Einrichtung zur Druck-Reduzierung somit nicht nur ausgebildet sein, ein vorgegebenes Druckniveau zu reduzieren, sondern auch den ausgangsseitigen Luftdruck - zumindest einseitig - auf ein bestimmtes Druckniveau zu regulieren. Besonders bevorzugt kann dabei die Einrichtung zur Druck-Reduzierung in die Druckregeleinrichtung integriert sein. D. h., die Druckregeleinrichtung kann z. B. in Form eines Gasdruckreglers und/oder in

Form eines pneumatischen Druckminderungsventils ausgebildet sein. Damit wird eine besonders kostengünstige Möglichkeit zur (zumindest in eine Richtung) regelbaren Druckluftbeaufschlagung bereitgestellt, die an eine Vielzahl von Druckluftsystem Sₙ mit unterschiedlichen Druckniveaus koppelbar ist. Zudem oder alternativ kann die Einrichtung zur Druck-Reduzierung jedoch auch als eigenständiges, d. h. von der Druckregeleinrichtung separates, Bauteil ausgeführt sein. Auch in diesem Fall wird auf vorteilhafte Weise eine kostengünstige Möglichkeit zur Bereitstellung eines bestimmten Druckniveaus für den Wischwasserbehälter geschaffen.

Nach einem weiteren Aspekt der Erfindung kann der Wischwasserbehälter ein elektromagnetisch betätigbares Ventil, vorzugsweise Magnetventil, zur Steuerung einer Entnahme von Scheibenwischwasser aus dem Wischwasserbehälter umfassen. Hierzu kann das elektromagnetisch betätigbare Ventil vorzugsweise an einem Auslass des Wischwasserbehälters angeordnet sein. Der Vorteil liegt darin, dass dadurch eine zuverlässige und präzise Entnahme von Scheibenwischwasser aus dem Wischwasserbehälter ermöglicht wird. Zudem oder alternativ kann der Wischwasserbehälter auch eine verschließbare Einfüllöffnung zur Befüllung des Wischwasserbehälters mit Scheibenwischwasser umfassen. Vorzugsweise umfasst der Wischwasserbehälter dabei auch einem dazugehörigen Verschlussdeckel zum Verschließen der Einfüllöffnung während des Betriebs. Zudem oder alternativ kann der Wischwasserbehälter auch ein Sichtfenster zur optischen Füllstandkontrolle und/oder ein oder mehrere Füllstandsonden umfassen. Die Füllstandsonde kann dabei einen Schwimmer und/oder einen induktiven und/oder magnetostriktiven Sensor sowie eine optische Anzeige und/oder eine Ausgabe eines elektrischen Signals umfassen. Auf vorteilhafte Weise wird dadurch eine zuverlässige Kontrolle des im Wischwasserbehälter vorhandenen Scheibenwischwassers ermöglicht.

Die vorliegende Erfindung ist insbesondere zum Einsatz in Kraftfahrzeugen geeignet. Selbstverständlich ist die vorliegende Erfindung allerdings nicht auf diesen bevorzugten Anwendungsbereich eingeschränkt, da die vorliegende Erfindung auch bei Schienenfahrzeugen, Luftfahrzeugen und/oder Schiffen einsetzbar ist.

Weiterhin wird erfindungsgemäß auch ein Kraftfahrzeug, vorzugsweise ein Personenkraftwagen, beansprucht, umfassend eine Vorrichtung zum Bereitstellen von Scheibenwischwasser für ein Kraftfahrzeug, wie in diesem Dokument beschrieben. Hierbei sollen alle zuvor im Zusammenhang mit der Vorrichtung offenbarten Merkmale auch im Zusammenhang mit dem Kraftfahrzeug offenbart und beanspruchbar sein. Darüber hinaus kann das Kraftfahrzeug auch noch weitere - im Zusammenhang mit Scheiben- bzw. Scheinwerferreinigungsanlagen übliche - Komponenten, darunter Scheibenwischer, Wischwasserdüsen und/oder Fluid-Förderleitungen etc., umfassen. Dadurch wird - auf vorteilhafte Weise - eine einfache und verschleißarme Möglichkeit zur Bereitstellung von Scheibenwischwasser aus dem Wischwasserbehälter bei einem Kraftfahrzeug realisiert, bei der das Scheibenwischwasser über den im Inneren des Wischwasserbehälters aufgebauten Druck aus dem Wischwasserbehälter gedrückt und damit "pneumatisch" zu entsprechenden Scheiben und/oder Scheinwerfereinrichtungen gefördert werden kann. Entsprechend kann somit auf eine verschleißanfällige mechanische Wasserpumpe zur Wischwasserförderung verzichtet werden.

Nach einem weiteren Aspekt der Erfindung kann das Kraftfahrzeug mindestens ein Druckluftsystem Sₙ, beispielsweise eine Druckluftbremsanlage, umfassen. Das mindestens eine Druckluftsystem Sₙ selbst kann dabei einen Druckerzeuger (z. B. einen Kompressor), einen Druckspeicher (z. B. ein Windkessel), einen Filter (z. B. Ölfilter) und/oder pneumatische Verteileinrichtungen umfassen. Neben dem mindestens einen Druckluftsystem Sₙ kann die Vorrichtung zum Bereitstellen von Scheibenwischwasser weiterhin einen Anschluss zur externen Druckbeaufschlagung umfassen, über den der Wischwasserbehälter pneumatisch an das mindestens eine Druckluftsystem Sₙ gekoppelt sein kann. Auf vorteilhafte Weise kann dadurch der Wischwasserbehälter mit Druckluft aus dem mindestens einen Druckluftsystem Sₙ beaufschlagt werden, wodurch auf eine eigene Drucklufterzeugereinrichtung der Vorrichtung selbst verzichtet werden kann.

Gemäß einer Weiterbildung dieses Aspekts kann das mindestens eine Druckluftsystem Sₙ hierbei eine Druckluftbremsanlage, eine Luftfederungsanlage und/oder eine druckluftbetätigte Antriebseinrichtung zum Öffnen und/oder Schließen einer Tür des Kraftfahrzeugs sein. Diese Aufzählung soll dabei nicht als abgeschlossen verstanden werden, so dass das mindestens eine Druckluftsystem Sₙ auch ein druckluftbetriebenes Bauteil des Kraftfahrzeugs, wie beispielsweise ein pneumatischer Aktor, ein Getriebe mit Schaltunterstützung, ein Drehgelenk mit einstellbarer Dämpfung und/oder eine Sitzfederung sein kann. Zudem oder alternativ kann das mindestens eine Druckluftsystem Sₙ auch eine druckluftführende Leitung und/oder ein mit Druckluft beaufschlagter Behälter, z. B. ein Kessel und/oder ein Reifen, sein. Auf vorteilhafte Weise kann dadurch eine Kopplung an ein oftmals bereits im Fahrzeug vorhandene Druckluftanlage ermöglicht werden.

Um dabei eine besonders ressourcenschonende Nutzung der im Kraftfahrzeug vorhandenen Druckluft zu ermöglichen, kann gemäß einem weiteren Aspekt der Erfindung der Wischwasserbehälter zumindest teilweise mit Abluft, die beim Entleeren eines pneumatischen Aktors des mindestens einen Druckluftsystems Sₙ anfällt, mittelbar oder unmittelbar beaufschlagbar sein oder beaufschlagt werden. Mit anderen Worten kann somit Druckluft, die zuvor zur Befüllung eines pneumatischen Aktors des mindestens einen Druckluftsystems verwendet wurde, zumindest zu einem Teil dem Wischwasserbehälter zugeleitet werden. In diesem Zusammenhang kann somit auch von einem "wiederverwenden" bzw. von einem "recyceln" der Abluft des pneumatischen Aktors zur Beaufschlagung des Wischwasserbehälters gesprochen werden. Die Begriffe "unmittelbar" und "mittelbar" können dabei so verstanden werden, dass bei einer unmittelbaren Beaufschlagung die beim Entleeren eines pneumatischen Aktors anfallende Abluft direkt in den Wischwasserbehälter gespeist werden kann. Demgegenüber kann bei einer mittelbaren Beaufschlagung die Abluft vor dem Zuleiten in den Wischwasserbehälter, beispielsweise in einem Vorratstank, zwischengespeichert werden. Insgesamt wird dadurch auf vorteilhafte Weise eine "Mehrfachnutzung" der einmal im Kraftfahrzeug erzeugten Druckluft ermöglicht.

Nach einem weiteren Aspekt der Erfindung kann die Druckregeleinrichtung eine elektro-pneumatische Steuereinrichtung sein, die über pneumatische Förderleitungen in Verbindung mit dem Wischwasserbehälter und dem mindestens einen Druckluftsystem Sₙ stehen kann. Weiterhin kann die elektro-pneumatische Steuereinrichtung bzw. die Druckregeleinrichtung ausgebildet sein, mittels elektrisch ansteuerbarer pneumatischer Ventile eine Verteilung von Druckluft zwischen diesen Komponenten, d. h. zwischen dem Wischwasserbehälter und dem mindestens einen Druckluftsystem Sₙ, vorzunehmen. Hierzu kann die elektro-pneumatische Steuereinrichtung ein Pneumatikmodul, dem die elektrisch ansteuerbaren pneumatischen Ventile zur Verteilung der Druckluft zugeordnet sein können, sowie ein Elektronikmodul zur Ansteuerung besagter Ventile umfassen, wobei das Pneumatikmodul und das Elektronikmodul als separate Bauteile ausgeführt sein können oder von einem gemeinsamen Gehäuse umhaust werden können. Auf vorteilhafte Weise kann dadurch eine schnelle und zentrale Druckluftverteilung in der Druckvorrichtung gewährleistet werden.

Gemäß einer Weiterbildung dieses Aspekts kann dabei die elektro-pneumatische Steuereinrichtung ferner ausgebildet sein, basierend auf einer Nutzeranforderung und/oder basierend auf Sensordaten, die vorzugsweise einen Verschmutzungsgrad einer Scheibe des Kraftfahrzeugs anzeigen, eine Entnahme von Scheibenwischwasser aus dem der Wischwasserbehälter zu steuern. Anders ausgedrückt kann die elektro-pneumatische Steuereinrichtung ausgebildet sein, Steuersignale, Fahrzeug- und/oder Sensordaten zu empfangen und auf Basis dieser eine Ansteuerung einzelner Komponenten der Vorrichtung zum Bereitstellen von Scheibenwischwasser vorzunehmen. Vorzugsweise kann die elektro-pneumatische Steuereinrichtung dabei ein elektromagnetisch betätigbares Ventil (z. B. ein Magnetventil), zur Steuerung einer Entnahme von Scheibenwischwasser aus dem Wischwasserbehälter ansteuern. Auf vorteilhafte Weise kann dadurch eine effiziente und bedarfsgerechte Nutzung des im Wischwasserbehälter vorhandenen Scheibenwischwassers erreicht werden.

Nach einem weiteren Aspekt der Erfindung kann das Kraftfahrzeug ein Nutzfahrzeug, vorzugsweise ein Omnibus oder ein Lastkraftwagen, sein. Hierbei ist es für den Fachmann allerdings sofort ersichtlich, dass die erfindungsgemäße Vorrichtung auch bei anderen Arten von Fahrzeugen angewendet werden kann, sodass auch Schutz für andere Arten von Fahrzeugen beansprucht wird, die eine derartige Vorrichtung zum Bereitstellen von Scheibenwischwasser umfassen. Im Speziellen wird erfindungsgemäß somit auch ein Schienenfahrzeug, vorzugsweise ein Triebfahrzeug, ein Luftfahrzeug, vorzugsweise ein Flugzeug, sowie ein Schiff bereitgestellt, die je eine Vorrichtung zum Bereitstellen von Scheibenwischwasser, wie in diesem Dokument beschrieben, umfassen. Dabei sollen die im Folgenden im Zusammenhang mit dem Kraftfahrzeug offenbarten Merkmale somit je auch für das Schienenfahrzeug und das Luftfahrzeug offenbart sein und damit auch insbesondere unabhängig vom Kraftfahrzeug beanspruchbar sein.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: Eine schematische Darstellung einer Vorrichtung zum Bereitstellen von Scheibenwischwasser für ein Kraftfahrzeug gemäß einer Ausführungsform der Erfindung;
- Figur 2:: Eine schematische Darstellung einer Vorrichtung zum Bereitstellen von Scheibenwischwasser für ein Kraftfahrzeug gemäß einer zweiten Ausführungsform der Erfindung; und
- Figur 3:: Eine schematische Darstellung eines Kraftfahrzeugs, umfassend eine Vorrichtung zum Bereitstellen von Scheibenwischwasser, gemäß einer Ausführungsform der Erfindung.

Gleiche oder funktional äquivalente Elemente sind dabei in allen Figuren mit denselben Bezugszeichen beschrieben und zum Teil nicht gesondert beschrieben.

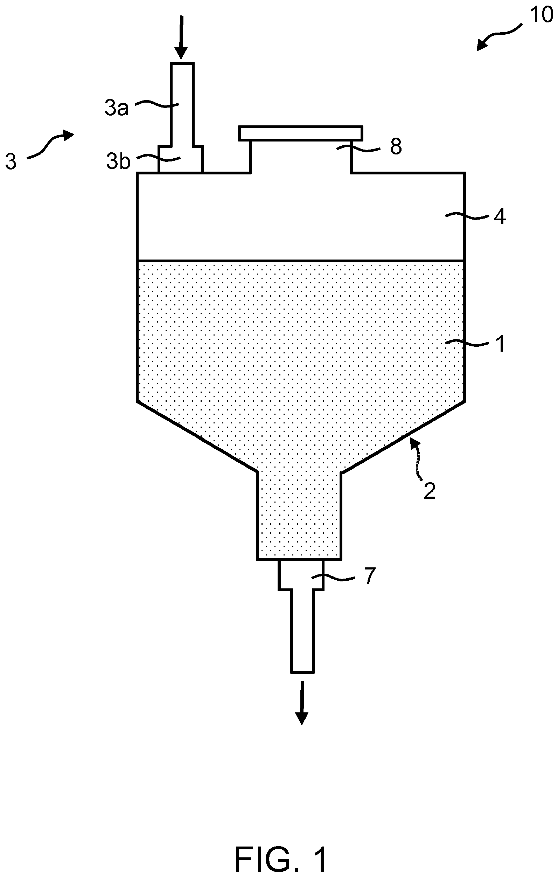

Figur 1 zeigt eine schematische Darstellung einer Vorrichtung 10 zum Bereitstellen von Scheibenwischwasser 1 für ein Kraftfahrzeug 20, umfassend einen Wischwasserbehälter 2 zur Lagerung und Bereitstellung von Scheibenwischwasser 1 sowie eine Druckregeleinrichtung 3, die ausgebildet ist, den Wischwasserbehälter 2 regelbar mit Druckluft 4 zu beaufschlagen. In der vorliegenden Ausführungsform ist die Druckregeleinrichtung 3 in Form eines Gasdruckreglers mit einem Anschluss 3a zur externen Druckbeaufschlagung ausgebildet. Mit anderen Worten umfasst die Druckregeleinrichtung 3 eine Einrichtung zur Druck-Reduzierung 3b, die ausgebildet ist, dem Wischwasserbehälter 2 ein bestimmtes Druckniveau bereitzustellen.

Hierzu kann der Anschluss 3a zur externen Druckbeaufschlagung mittels entsprechender Förderleitungen pneumatisch an z. B. ein Druckluftsystem Sₙ eines Kraftfahrzeugs 20 mit einem Druckniveau von z. B. 10 bar gekoppelt werden. Dieses Druckniveau wird durch die vorliegend als Gasdruckregler ausgebildete Druckregeleinrichtung 3 ausgangsseitig, d. h. wischwasserbehälterseitig, auf ein zeitlich konstantes niedrigeres Soll-Luftdruckniveau pₛₒₗₗ von beispielsweise pₛₒₗₗ = 1 bar reguliert, wobei dieses Druckniveau auch unabhängig von einem aktuellen Scheibenwischwasser-Füllstand im Wischwasserbehälter 2 bereitgestellt werden kann. Die Regelbarkeit der Druckluftbeaufschlagung kann dabei auch nur "einseitig" erfolgen. D. h., unterschreitet das Luftdruckniveau im Wischwasserbehälter 2 den Sollwert von pₛₒₗₗ = 1 bar, so öffnet der Gasdruckregler zur erneuten Angleichung des aktuellen Luftdruckniveaus an das Soll-Luftdruckniveau pₛₒₗₗ. Steigt hingegen das aktuelle Luftdruckniveau im Wischwasserbehälter 2 jedoch über 1 bar (z. B. durch Erwärmung), so muss kein aktives Gegensteuern erfolgen. Vorzugsweise ist die Druckregeleinrichtung 3 jedoch zur "zweiseitigen" Regelbarkeit der Druckluftbeaufschlagung ausgebildet, d. h. sowohl eine positive als auch negative Regelabweichung zu minimieren.

Durch die eben ausgeführte regelbare Beaufschlagung mit Druckluft 4 wird insgesamt - auf vorteilhafte Weise - eine einfache und verschleißarme Möglichkeit zur Bereitstellung von Scheibenwischwasser 1 aus dem Wischwasserbehälter 2 realisiert, bei der das Scheibenwischwasser 1 über den im Inneren des Wischwasserbehälters 2 aufgebauten Druck aus dem Wischwasserbehälter 2 gedrückt und damit "pneumatisch" zu entsprechenden Scheiben und/oder Scheinwerfereinrichtungen (nicht dargestellt) gefördert werden kann. Hierzu umfasst der Wischwasserbehälter 2 einen Auslass, der vorliegend in Form eines elektromagnetisch betätigbaren Ventils ausgebildet ist, um dadurch die Entnahme von Scheibenwischwasser 1 aus dem Wischwasserbehälter 2 präzise und zuverlässig zu steuern. Weiterhin umfasst der Wischwasserbehälter 2 noch eine verschließbare Einfüllöffnung 8 zur Befüllung des Wischwasserbehälters 2 mit Scheibenwischwasser 1.

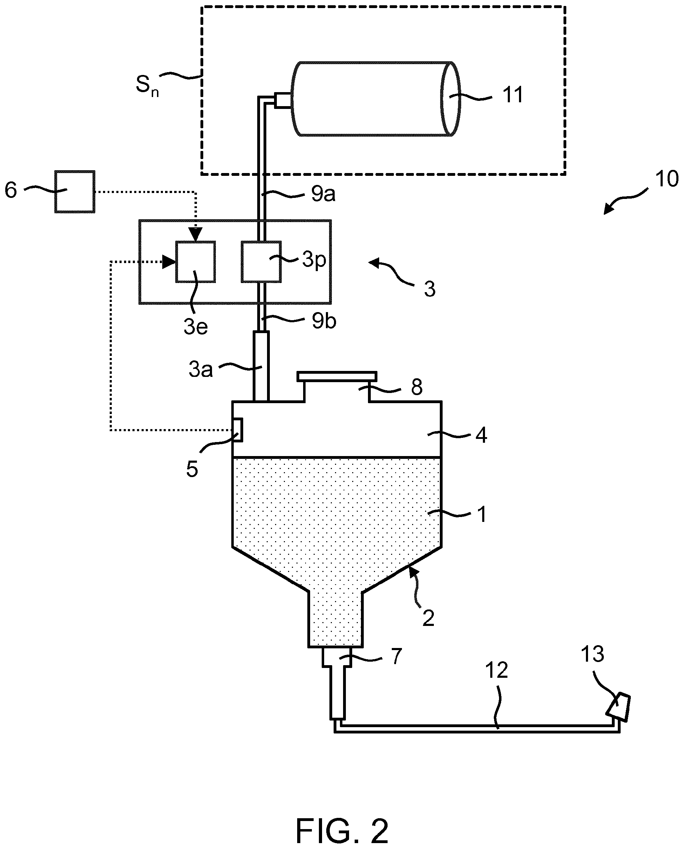

Figur 2 zeigt eine schematische Darstellung einer Vorrichtung 10 zum Bereitstellen von Scheibenwischwasser 1 für ein Kraftfahrzeug 20 gemäß einer zweiten Ausführungsform der Erfindung. Wiederum umfasst die Vorrichtung 10 dabei einen Wischwasserbehälter 2 mit einer verschließbaren Einfüllöffnung 8 und einen Auslass in Form eines elektromagnetisch betätigbaren Ventils 7. Weiterhin umfasst die Vorrichtung 10 vorliegend auch eine an das elektromagnetisch betätigbare Ventil 7 angeschlossene Fluid-Förderleitung 12, über die das Scheibenwischwasser 1 aus dem Wischwasserbehälter 2 zu einer Düse 13 geleitet werden kann. Hierbei kann die Düse 13 ausgebildet sein, einen Scheibenwischwasserstrahl zu erzeugen, der auf entsprechende Scheiben eines Kraftfahrzeugs 20, darunter Front-, Heck- und/oder Seitenscheiben, und/oder auf eine Scheinwerfereinrichtung des Kraftfahrzeugs 20 (z. B. Frontscheinwerfer) gerichtet werden kann, um diese zu reinigen.

Ferner umfasst die Vorrichtung 10 einen Anschluss 3a zur externen Druckbeaufschlagung, der über die pneumatische Förderleitung 9b mit einer vorliegend als elektro-pneumatische Steuereinrichtung ausgebildete Druckregeleinrichtung 3 der Vorrichtung 10 gekoppelt bzw. verbunden ist. Weiterhin ist die elektro-pneumatische Steuereinrichtung bzw. die Druckregeleinrichtung 3 über die pneumatische Förderleitung 9a an mindestens ein Druckluftsystem Sₙ (z. B. eines Kraftfahrzeugs 20) gekoppelt, wobei von diesem mindestens einem Druckluftsystem Sₙ vorliegend lediglich ein Vorratsbehälter 11 dargestellt ist. Die elektro-pneumatische Steuereinrichtung bzw. die Druckregeleinrichtung 3 kann dabei ausgebildet sein, zur Regelung des Luftdrucks innerhalb des Wischwasserbehälters 2 eine Verteilung von Druckluft 4 zwischen dem Vorratsbehälter 11 und dem Wischwasserbehälter 2 mittels elektrisch ansteuerbarer pneumatischer Ventile (nicht dargestellt) vorzunehmen. Vorzugsweise umfasst die elektro-pneumatische Steuereinrichtung hierzu ein Pneumatikmodul 3e, dem die elektrisch ansteuerbaren pneumatischen Ventile (nicht dargestellt) zur Verteilung der Druckluft 4 zugeordnet sein können, sowie ein Elektronikmodul 3e zur Ansteuerung besagter Ventile.

Bevorzugt ist die elektro-pneumatische Steuereinrichtung bzw. die Druckregeleinrichtung 3 ferner dazu ausgebildet, einen Luftdruck innerhalb des Wischwasserbehälters auf ein Soll-Luftdruckniveau pₛₒₗₗ zu regeln. Hierzu umfasst die Vorrichtung 10 vorliegend eine Sensoreinrichtung 5, die ein vom Luftdruck innerhalb des Wischwasserbehälters 2 abhängiges Signal erzeugen kann. Dieses Signal wird dabei als Regelgröße verwendet, die mit einem vorgegebenen Sollwert der Regelgröße (Soll-Luftdruckniveau pₛₒₗₗ) verglichen und eine Abweichung zwischen Sollwert und Istwert durch entsprechende Ansteuerung der elektrisch ansteuerbaren pneumatischen Ventile des Pneumatikmoduls 3e minimiert wird. Das variable Soll-Luftdruckniveau pₛₒₗₗ wird dabei vorliegend durch einen Sollwertgeber 6 an die elektro-pneumatische Steuereinrichtung bzw. die Druckregeleinrichtung 3 vorgegeben. Auf vorteilhafte Weise wird so ein zeitlich konstantes Luftdruckniveau (pₛₒₗₗ) innerhalb des Wischwasserbehälters aufrechterhalten, wodurch von der Vorrichtung auch über längere Betriebszeiten zuverlässig ein konstanter Scheibenwischwasservolumenstrom bereitgestellt werden kann.

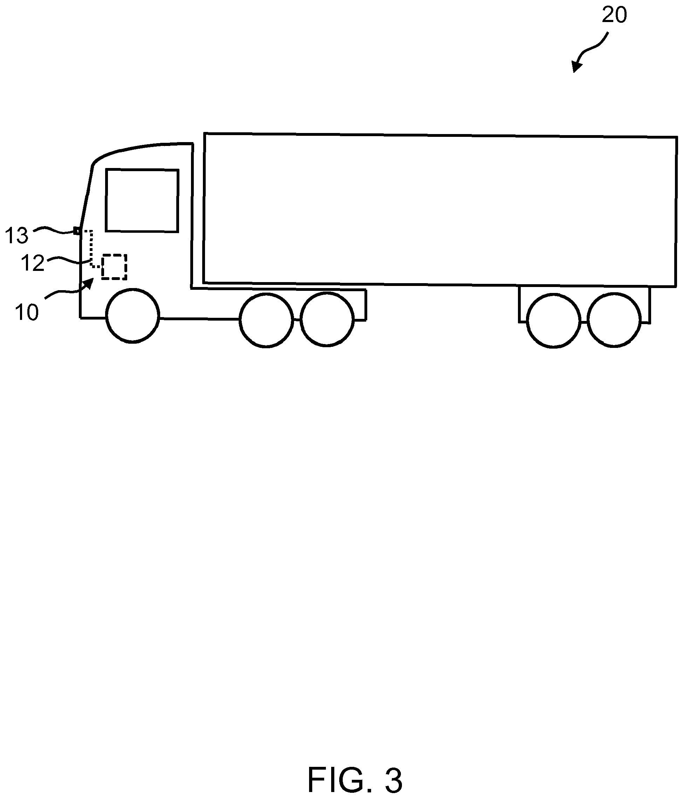

Figur 3 zeigt eine schematische Darstellung eines Kraftfahrzeugs 20, umfassend eine Vorrichtung 10 zum Bereitstellen von Scheibenwischwasser 1 gemäß einer Ausführungsform der Erfindung. Vorliegend handelt es sich bei dem Kraftfahrzeug um einen Lastkraftwagen, jedoch können auch auf andere Arten von Fahrzeugen, darunter Omnibusse, Schienenfahrzeuge und/oder Luftfahrzeuge eine erfindungsgemäße Vorrichtung umfassen. Wie in Figur 3 gezeigt, sind die durch ein gestricheltes Quadrat symbolisierten Komponenten Wischwasserbehälter 2 und Druckregeleinrichtung 3 der Vorrichtung 10 im Fahrerhaus des Lastkraftwagens angeordnet. Weiterhin umfasst die Vorrichtung 10 bzw. der Lastkraftwagen eine an den Wischwasserbehälter 2 angeschlossene Fluid-Förderleitung 12 sowie eine Düse 13 zur Erzeugung eines Scheibenwischwasserstrahls. Durch die regelbare Beaufschlagung des Wischwasserbehälters mit Druckluft kann Scheibenwischwasser 1 aus dem Wischwasserbehälter 2 auf die Windschutzscheibe des Lastkraftwagens gefördert werden, um dort die Windschutzscheibe von Verschmutzungen zu reinigen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Scheibenwischwasser
- 2: Wischwasserbehälter
- 3: Druckregeleinrichtung
- 3a: Anschluss zur externen Druckbeaufschlagung
- 3b: Einrichtung zur Druck-Reduzierung
- 3e: Elektronikmodul
- 3p: Pneumatikmodul
- 4: Druckluft
- 5: Sensoreinrichtung
- 6: Sollwertgeber
- 7: Ventil
- 8: Einfüllöffnung
- 9a, 9b: Pneumatische Förderleitung
- 10: Vorrichtung
- 11: Druckluft-Vorratsbehälter
- 12: Fluid-Förderleitung
- 13: Düse
- 20: Kraftfahrzeug
- Sₙ: Druckluftsystem

## Patentansprüche

1. Vorrichtung (10) zum Bereitstellen von Scheibenwischwasser (1) für ein Kraftfahrzeug (20), umfassend
a) einen Wischwasserbehälter (2) zur Lagerung und Bereitstellung von Scheibenwischwasser (1); und
b) eine Druckregeleinrichtung (3), die ausgebildet ist, den Wischwasserbehälter (2) regelbar mit Druckluft (4) zu beaufschlagen,
wobei die Druckregeleinrichtung (3) ausgebildet ist, einen Luftdruck innerhalb des Wischwasserbehälters (2), vorzugsweise unabhängig von einem Scheibenwischwasser-Füllstand im Wischwasserbehälter (2), auf ein Soll-Luftdruckniveau pₛₒₗₗ zu regeln,
wobei über die regelbare Beaufschlagung des Wischwasserbehälters (2) mit Druckluft (4) ein aus dem Wischwasserbehälter (2) entnehmbarer Scheibenwischwasservolumenstrom einstellbar ist,
**gekennzeichnet durch** eine Sensoreinrichtung (5), vorzugsweise ein Drucksensor, die ein vom Luftdruck innerhalb des Wischwasserbehälters (2) abhängiges Signal erzeugt, wobei die Regelung der Druckregeleinrichtung (3) auf Basis dieses Signals erfolgt.

2. Vorrichtung (10) nach Anspruch 1, **gekennzeichnet durch** einen Anschluss (3a) zur externen Druckbeaufschlagung, über den der Wischwasserbehälter (2) pneumatisch an mindestens ein Druckluftsystem Sₙ eines Kraftfahrzeugs (20) koppelbar ist.

3. Vorrichtung (10) nach einem der vorherigen Ansprüche, **dadurch gekennzeichnet, dass** die Vorrichtung (10) eine Einrichtung zur Druck-Reduzierung (3b), vorzugsweise in Form eines pneumatischen Druckminderungsventils, umfasst, wobei die Einrichtung zur Druck-Reduzierung (3b) ausgebildet ist, der Druckregeleinrichtung (3) und/oder dem Wischwasserbehälter (2) ein bestimmtes Druckniveau bereitzustellen.

4. Vorrichtung (10) nach einem der vorherigen Ansprüche, **dadurch gekennzeichnet, dass** der Wischwasserbehälter (2) mindestens eines der folgenden Merkmale umfasst:
a) ein elektromagnetisch betätigbares Ventil (7), vorzugsweise Magnetventil, zur Steuerung einer Entnahme von Scheibenwischwasser (1) aus dem Wischwasserbehälter (2);
b) eine verschließbare Einfüllöffnung (8) zur Befüllung des Wischwasserbehälters (2) mit Scheibenwischwasser (1);
c) ein Sichtfenster zur optischen Füllstandkontrolle und/oder ein oder mehrere Füllstandsonden.

5. Kraftfahrzeug (20) umfassend eine Vorrichtung (10) zum Bereitstellen von Scheibenwischwasser (1) für ein Kraftfahrzeug (20), nach einem der vorherigen Ansprüche 1-4.

6. Kraftfahrzeug (20) nach Anspruch 5, **dadurch gekennzeichnet, dass** das Kraftfahrzeug (20) mindestens ein Druckluftsystem Sₙ umfasst und die Vorrichtung (10) zum Bereitstellen von Scheibenwischwasser (1) einen Anschluss (3a) zur externen Druckbeaufschlagung umfasst, über den der Wischwasserbehälter (2) pneumatisch an das mindestens eine Druckluftsystem Sₙ gekoppelt ist.

7. Kraftfahrzeug (20) nach Anspruch 6, **dadurch gekennzeichnet, dass** das mindestens eine Druckluftsystem Sₙ
a) eine Druckluftbremsanlage; und/oder
b) eine Luftfederungsanlage; und/oder
c) eine druckluftbetätigte Antriebseinrichtung zum Öffnen und/oder Schließen einer Tür des Kraftfahrzeugs (20) ist.

8. Kraftfahrzeug (20) nach Anspruch 6 oder 7, **dadurch gekennzeichnet, dass** der Wischwasserbehälter (2) zumindest teilweise mit Abluft, die beim Entleeren eines pneumatischen Aktors des mindestens einen Druckluftsystems Sₙ anfällt, mittelbar oder unmittelbar beaufschlagbar ist oder beaufschlagt wird.

9. Kraftfahrzeug (20) nach einem der Ansprüche 6 bis 8, **dadurch gekennzeichnet, dass** die Druckregeleinrichtung (3) eine elektro-pneumatische Steuereinrichtung ist, die über pneumatische Förderleitungen (9a, 9b) in Verbindung mit dem Wischwasserbehälter (2) und dem mindestens einen Druckluftsystem Sₙ steht und ausgebildet ist, mittels elektrisch ansteuerbarer pneumatischer Ventile eine Verteilung von Druckluft (4) zwischen diesen Komponenten vorzunehmen.

10. Kraftfahrzeug (20) nach Anspruch 9, **dadurch gekennzeichnet, dass** die elektro-pneumatische Steuereinrichtung ausgebildet ist, basierend auf einer Nutzeranforderung und/oder basierend auf Sensordaten, die vorzugsweise einen Verschmutzungsgrad einer Scheibe des Kraftfahrzeugs (20) anzeigen, eine Entnahme von Scheibenwischwasser (1) aus dem Wischwasserbehälter (2) zu steuern.

11. Kraftfahrzeug (20) nach einem der Ansprüche 5 bis 10, **dadurch gekennzeichnet, dass** das Kraftfahrzeug (20) ein Nutzfahrzeug, vorzugsweise ein Omnibus oder ein Lastkraftwagen, ist.

## Claims

1. An apparatus (10) for providing window-washing water (1) for a motor vehicle (20), comprising
a) a washing-water container (2) for storage and provision of window-washing water (1); and
b) a pressure-regulating device (3) which is configured for charging the washing-water container (2) with compressed air (4) in a regulable manner,
wherein the pressure-regulating device (3) is configured for regulating, preferably independently of a fill level of window-washing water in the washing-water container (2), an air pressure within the washing-water container (2) to a target airpressure level p_{target},
wherein a volumetric flow rate of window-washing water which can be withdrawn from the washing-water container (2) can be set via the regulable charging of the washing-water container (2) with compressed air (4),
**characterized by** a sensor device (5), preferably a pressure sensor, which generates a signal which depends on the air pressure within the washing-water container (2), wherein the regulation of the pressure-regulating device (3) is realized on the basis of said signal.

2. The apparatus (10) according to Claim 1, **characterized by** a connection (3a) for external application of pressure, via which connection the washing-water container (2) can be coupled pneumatically to at least one compressed-air system Sₙ of a motor vehicle (20).

3. The apparatus (10) according to either of the preceding claims, **characterized in that** the apparatus (10) comprises a device for pressure reduction (3b), preferably in the form of a pneumatic pressure-reducing valve, wherein the device for pressure reduction (3b) is configured for providing the pressure-regulating device (3) and/or the washing-water container (2) with a particular pressure level.

4. The apparatus (10) according to one of the preceding claims, **characterized in that** the washing-water container (2) comprises at least one of the following features:
a) an electromagnetically actuable valve (7), preferably solenoid valve, for controlling a withdrawal of window-washing water (1) from the washing-water container (2);
b) a closable filling opening (8) for filling of the washing-water container (2) with window-washing water (1);
c) a viewing window for optical fill-level monitoring, and/or one or more fill-level probes.

5. A motor vehicle (20) comprising an apparatus (10) for providing window-washing water (1) for a motor vehicle (20) according to one of the preceding Claims 1-4.

6. The motor vehicle (20) according to Claim 5, **characterized in that** the motor vehicle (20) comprises at least one compressed-air system Sₙ, and the apparatus (10) for providing window-washing water (1) comprises a connection (3a) for external application of pressure, via which connection the washing-water container (2) is coupled pneumatically to the at least one compressed-air system Sₙ.

7. The motor vehicle (20) according to Claim 6, **characterized in that** the at least one compressed-air system Sₙ is
a) a compressed-air brake system; and/or
b) an air suspension system; and/or
c) a compressed air-actuated drive device for opening and/or closing a door of the motor vehicle (20) .

8. The motor vehicle (20) according to Claim 6 or 7, **characterized in that** the washing-water container (2) can be or is indirectly or directly charged at least partially with waste air which accumulates during emptying of a pneumatic actuator of the at least one compressed-air system Sₙ.

9. The motor vehicle (20) according to one of Claims 6 to 8, **characterized in that** the pressure-regulating device (3) is an electropneumatic control device which, via pneumatic delivery lines (9a, 9b), is connected to the washing-water container (2) and to the at least one compressed-air system Sₙ and is configured for carrying out, by means of electrically actuable pneumatic valves, a distribution of compressed air (4) between said components.

10. The motor vehicle (20) according to Claim 9, **characterized in that** the electropneumatic control device is configured for controlling, on the basis of a user request and/or on the basis of sensor data, which preferably indicate a degree of soiling of a window of the motor vehicle (20), a withdrawal of window-washing water (1) from the washing-water container (2).

11. The motor vehicle (20) according to one of Claims 5 to 10, **characterized in that** the motor vehicle (20) is a utility vehicle, preferably an omnibus or a lorry.

## Revendications

1. Dispositif (10) permettant de fournir du liquide de lave-glace (1) pour un véhicule automobile (20), comprenant
a) un réservoir de liquide de lave-glace (2) permettant de stocker et de fournir du liquide de lave-glace (1) ; et
b) un moyen de régulation de pression (3) qui est réalisé pour pressuriser de manière ajustable le réservoir de liquide de lave-glace (2) avec de l'air comprimé (4),
le moyen de régulation de pression (3) étant réalisé pour réguler une pression atmosphérique à l'intérieur du réservoir de liquide de lave-glace (2), de préférence indépendamment d'un niveau de remplissage de liquide de lave-glace dans le réservoir de liquide de lave-glace (2), sur un niveau de pression atmosphérique de consigne pₛₒₗₗ,
la pressurisation ajustable du réservoir de liquide de lave-glace (2) avec de l'air comprimé (4) permettant de régler un débit volumique de liquide de lave-glace pouvant être prélevé sur le réservoir de liquide de lave-glace (2),
**caractérisé par** un dispositif capteur (5), de préférence un capteur de pression, qui génère un signal dépendant de la pression atmosphérique à l'intérieur du réservoir de liquide de lave-glace (2), la régulation du moyen de régulation de pression (3) étant effectuée sur la base de ce signal.

2. Dispositif (10) selon la revendication 1, **caractérisé par** un branchement (3a) destiné à une pressurisation externe par lequel le réservoir de liquide de lave-glace (2) peut être couplé de manière pneumatique à au moins un système d'air comprimé Sₙ d'un véhicule automobile (20).

3. Dispositif (10) selon l'une quelconque des revendications précédentes, **caractérisé en ce que** le dispositif (10) comprend un moyen de réduction de pression (3b), de préférence sous la forme d'une soupape de réduction de pression pneumatique, le moyen de réduction de pression (3b) étant réalisé pour fournir un certain niveau de pression au moyen de régulation de pression (3) et/ou au réservoir de liquide de lave-glace (2).

4. Dispositif (10) selon l'une quelconque des revendications précédentes, **caractérisé en ce que** le réservoir de liquide de lave-glace (2) comprend au moins l'une des particularités suivantes :
a) une soupape à actionnement électromagnétique (7), de préférence une électrovanne, pour commander un prélèvement de liquide de lave-glace (1) sur le réservoir de liquide de lave-glace (2) ;
b) une ouverture de remplissage (8) verrouillable destinée au remplissage du réservoir de liquide de lave-glace (2) avec du liquide de lave-glace (1) ;
c) un hublot destiné au contrôle visuel du niveau de remplissage et/ou une ou plusieurs sondes de niveau de remplissage.

5. Véhicule automobile (20), comprenant un dispositif (10) permettant de fournir du liquide de lave-glace (1) pour un véhicule automobile (20) selon l'une quelconque des revendications précédentes 1 à 4.

6. Véhicule automobile (20) selon la revendication 5, **caractérisé en ce que** le véhicule automobile (20) comprend au moins un système d'air comprimé Sₙ, et le dispositif (10) permettant de fournir du liquide de lave-glace (1) comprend un branchement (3a) destiné à la pressurisation externe par lequel le réservoir de liquide de lave-glace (2) est couplé de manière pneumatique audit au moins un système d'air comprimé Sₙ.

7. Véhicule automobile (20) selon la revendication 6, **caractérisé en ce que** ledit au moins un système d'air comprimé Sₙ est
a) un système de freinage pneumatique ; et/ou
b) un système de suspension pneumatique ; et/ou
c) un moyen d'entraînement pneumatique destiné à l'ouverture et/ou à la fermeture d'une portière du véhicule automobile (20).

8. Véhicule automobile (20) selon la revendication 6 ou 7, **caractérisé en ce que** le réservoir de liquide de lave-glace (2) peut être ou est pressurisé directement ou indirectement au moins partiellement avec de l'air évacué qui résulte lors de la vidange d'un actionneur pneumatique de l'au moins un système d'air comprimé Sₙ.

9. Véhicule automobile (20) selon l'une quelconque des revendications 6 à 8, **caractérisé en ce que** le moyen de régulation de pression (3) est un moyen de commande électropneumatique qui est en communication avec le réservoir de liquide de lave-glace (2) par l'intermédiaire de tuyaux d'alimentation pneumatiques (9a, 9b) et avec ledit au moins un système d'air comprimé Sₙ et est réalisé pour effectuer une distribution d'air comprimé (4) parmi ces composants au moyen de soupapes pneumatiques à pilotage électrique.

10. Véhicule automobile (20) selon la revendication 9, **caractérisé en ce que** le moyen de commande électropneumatique est réalisé pour commander sur la base d'une demande utilisateur et/ou sur la base de données de capteur qui indiquent de préférence un degré d'encrassement d'une vitre du véhicule automobile (20) un prélèvement de liquide de lave-glace (1) sur le réservoir de liquide de lave-glace (2).

11. Véhicule automobile (20) selon l'une quelconque des revendications 5 à 10, **caractérisé en ce que** le véhicule automobile (20) est un véhicule utilitaire, de préférence un bus ou un poids lourd.
